# EUROPEAN PATENT SPECIFICATION

(11) **EP 2 915 419 B1**
(45) Date of publication and mention of the grant of the patent: **21.09.2016**
(21) Application number: 14425023.0
(22) Date of filing: 06.03.2014
(51) Int. Cl.: A01C 15/00, A01C 17/00

(54) **Polyvalent agricultural device**
Polyvalente landwirtschaftliche Vorrichtung
Dispositif polyvalent agricol

(43) Date of publication of application: 09.09.2015
(73) Proprietor: O.M.S.M.A.G. S.n.c., 12034 Paesana (CN) (IT)
(72) Inventor: Alberto, Stefano, I-12034 Paesana (CN) (IT)
(74) Representative: Garavelli, Paolo

(56) References cited:
- EP-A2- 0 154 326
- EP-A2- 0 246 575
- DE-A1- 4 014 283
- DE-U1- 20 117 747
- US-A- 5 842 649

## Description

The present invention refers to a polyvalent agricultural fixture of the carried type.

Agricultural fixtures of the carried type, and of the semi-carried type, are known in the art, and can be dragged by known agricultural tractors, used for a single agricultural operation, such as spreading manure, or a fertilizer, or dispensing dung or maize or other agricultural material, implying the need of using a specific agricultural fixture for every necessary agricultural operation.

Carried and/or semi-carried agricultural fixtures are also known, which are equipped with dispensing members for liquid manures and fertilizers, such as simple orifices from which the manure is sprayed onto the ground or on the leaves, or injectors for fertilizers put underground at a certain ground depth.

Dispensing members are also known for solid agricultural materials such as spreading disks or helical blades, or conveyor means equipped with rotary brushes or with spreading disks, or grids and oscillating arms, or smooth, grooved or toothed rotary rollers; such dispensing members are necessary for spreading the agricultural material but do not guarantee a deposit thereof with constant thickness.

Finally, carried and/or semi-carried agricultural fixtures are known, which are lacking self-loading systems, equipped only with a suitable filling opening to enable filling the fixture hopper with agricultural material, by using mechanical blades or enabling the vertical descent of the material from suitable silos.

DE-U1-20117747 discloses a polyvalent agricultural fixture according to the preamble of claim 1.

Therefore, object of the present invention is solving the above prior art problems by providing a polyvalent agricultural fixture adapted to perform one or more agricultural functions.

A further object of the present invention is providing a polyvalent agricultural fixture characterized by a speed detecting system which allows regulating the spreading of agricultural materials depending on the speed assumed by the carrier tractor.

The above and other objects and advantages of the present invention, as will result from the following description, are obtained with a polyvalent agricultural fixture as claimed in the independent claim. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

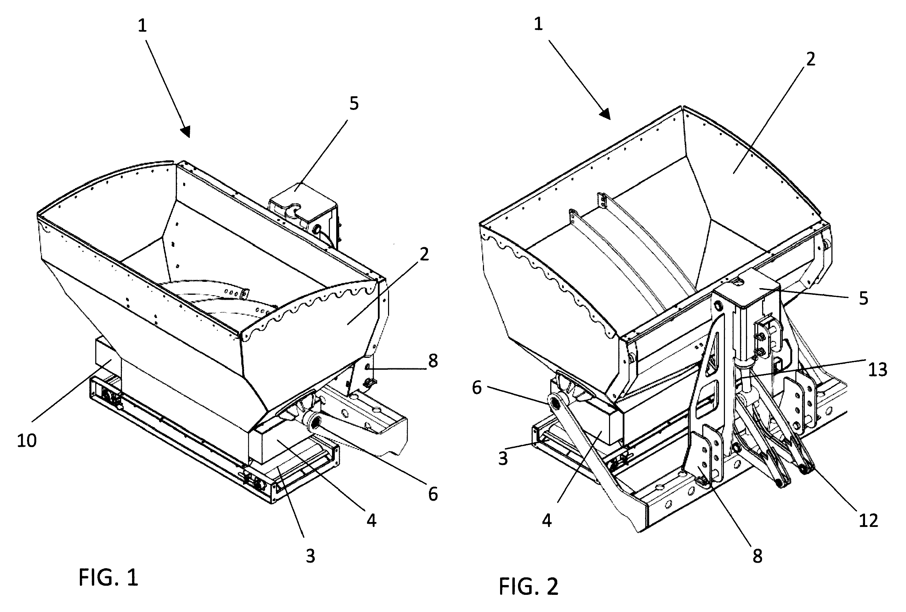

- Figure 1 is a three-dimensional view of a preferred embodiment of the agricultural fixture according to the present invention;
- Figure 2 shows a second three-dimensional view of the preferred embodiment of the agricultural fixture according to the present invention;
- Figure 3 shows a three-dimensional view of a second preferred embodiment of the agricultural fixture according to the present invention;
- Figure 4 shows a second three-dimensional view of the second preferred embodiment of the agricultural fixture according to the present invention;
- Figures 5-6 shows two side sectional views of the self-loading system characteristic of the preferred embodiment of the agricultural fixture according to the present invention;
- Figures 7-8 show two side sectional views of the self-loading system characteristic of the second preferred embodiment of the agricultural fixture according to the present invention.

With reference to the Figures, a preferred embodiment of the present invention is shown and described. It will be immediately obvious that numerous variations and modifications (for example related to shape, sizes, arrangements and parts with equivalent functionality) could be made to what is described, without departing from the scope of the invention, as appears from the enclosed claims.

With reference to the Figures, the polyvalent agricultural fixture 1 of the carried type according to the present invention is suitable to perform one or more agricultural functions for spreading various types of agricultural material, and comprises at least one hopper 2, advantageously shaped as a truncated cone, equipped with an opening on its bottom or with another suitable shape; and at least one self-loading system 5 suitable for filling such hopper 2 with agricultural material like granular manure, dung, maize or other suitable material.

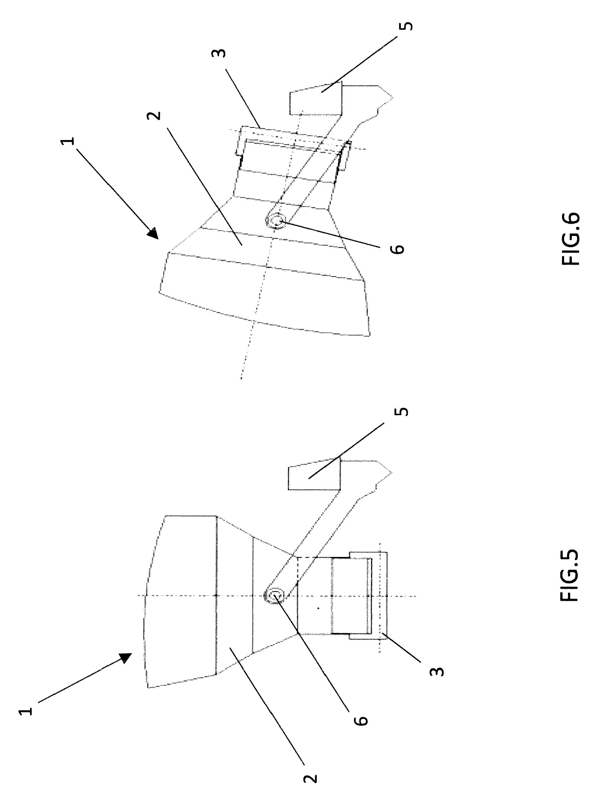

The self-loading system 5 comprises:
- at least one mechanical member 13, such as a double-effect piston, or a worm screw, or a multiple-pitch screw, or other suitable member; such member being motored by an hydraulic or electric drive actuated by an hydraulic or electric circuit of the tractor carrying such agricultural fixture 1;
at least one lever-type overturning system 12 suitable to receive a command from such mechanical member 13 and to overturn such hopper 2, enabling the rotation with a 90° angle or other suitable angle along its own rotation axis 6, inducing a parallel alignment between the upper edge of the hopper 2 and the ground surface, as shown in Figures 5 and 6, to enable the self-filling of the hopper 2 with suitable agricultural material.

The agricultural fixture 1 is fastened to at least one lifting device of an agricultural tractor, through at least one or more fastening means 8, such as brackets or other suitable means, integrated in such self-loading system 5.

Moreover, the agricultural fixture 1 comprises at least one delivering means 3 like a delivering belt or other suitable means to transfer the agricultural material to at least one or more use destinations, such as rows of orchards, feeders of animal farms, agricultural terrains or other suitable destination. The delivering means 3 comprise at least one regulating system, advantageously composed of at least one deviating means shaped as a truncated cone with variable walls, suitable to adjust the width of the spreading area of the agricultural material, enabling its suitable delivery to satisfy one or more agricultural operating needs; and at least one speed detecting system suitable to arrange both the spreading of agricultural material proportionally to the speed assumed by the tractor carrying such agricultural fixture 1, and the constant spreading of the agricultural material independently from the speed assumed by the carrier tractor.

The speed detecting system comprises:
- at least one detecting means, such as a sensor or other suitable means to detect at least one signal characterizing the speed of the tractor carrying such agricultural fixture 1;
- at least one electronic card suitable to receive at least one signal sent by such detecting means;
- at least one measuring instrument such as a tachometer, an encoder or other suitable instrument to detect the signal processed by such electronic card and to send an electronic input signal to at least one motor 10 of a crushing system 4 and to at least one motor (not shown) of such delivering means 2, respectively adjusting their crushing speed and spreading speed.

Moreover, the agricultural fixture 1 comprises at least one crushing system 4 integrated inside such hopper 2, such crushing system 4 being characterized by at least one motored mill with toothed, or smooth, or grooved cylinders, or other system suitable to crush the agricultural material self-loaded into the hopper 2, by the self-loading system 5, and to deposit it onto the delivering means 3, enabling an accurate and uniform dispensing of agricultural material.

Moreover, the agricultural fixture 1 comprises at least one electronic control device, such as a microcontroller or other device suitable to communicate with at least one measuring instrument, such as an odometer or other suitable one, placed on the carrier tractor, and to check the correct operation of the crushing system 4, of the self-loading system 5, and of the delivering means 3 of such agricultural fixture 1.

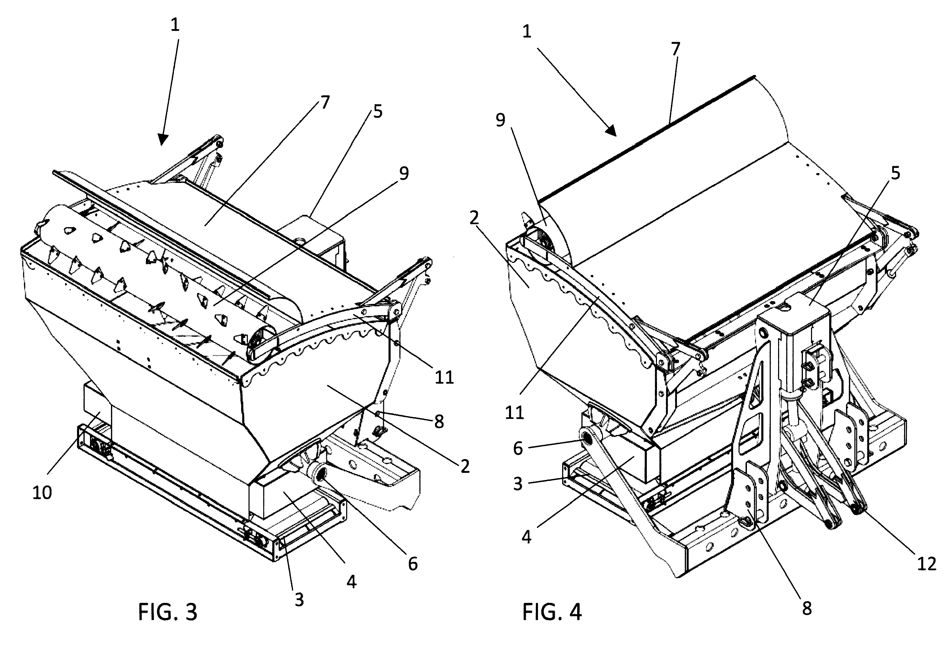

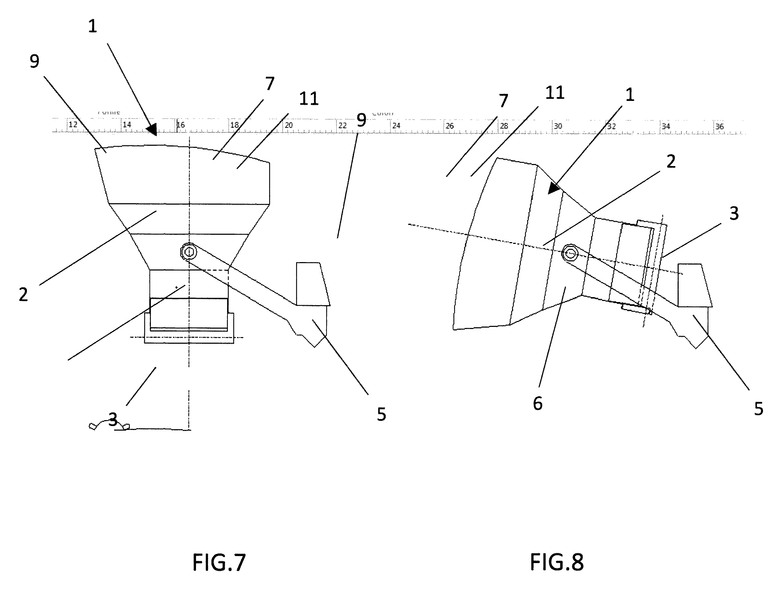

Finally, the agricultural fixture 1, as shown in Figures 3, 4, 7, 8, has a second preferred embodiment, comprising at least one crumbling system; the crumbling system comprises:
- at least one lever-type system 11 activated by the lever-type overturning system 12 of the self-loading system 5 during its parallel positioning along the rotation axis 6 of the hopper 2, to enable filling the hopper 2 itself with agricultural material, substantially maize;
- at least one rotary means 9, such as a scraping rolled or other means suitable for mowing the agricultural material from at least one or more silos, such rotary means 9 being mechanically connected to the lever-type system 11;
- at least one conveying means 7 suitable to convey the agricultural material, mowed by the rotary means 9 into the hopper 2, such conveying means 7 being mechanically connected to the lever-type system 11.

The invention has the following advantages:
- allowing to use a single agricultural fixture for performing one or more agricultural functions;
- ensuring reliability and efficiency of the agricultural fixture being equipped with a speed detecting system which enables spreading the agricultural material depending on the speed assumed by the tractor carrying the agricultural fixture;
- improving the accuracy of the agricultural fixture in its spreading activity of agricultural material, ensuring a constant deposit thickness;
- providing the agricultural fixture with a self-loading system of the agricultural material, avoiding the use of auxiliary tools, such as mechanical blades or silos;
- allowing the transfer of agricultural material, in particular maize, from the agricultural fixture directly into the feeders;
- reducing the deposit of agricultural material in the hopper of the polyvalent agricultural fixture, such hopper being equipped with a crushing system of the agricultural material to be spread, which limits the formation of waste material.

## Claims

1. Polyvalent agricultural fixture (1) comprising at least one crushing system (4) integrated inside at least one hopper (2), at least one self-loading system (5), and at least one delivering means (3), said delivering means (3) comprising at least one spreading regulating system, **characterized in that** said delivering means (3) further comprises at least one speed detecting system, and **in that** the polyvalent agricultural fixture (1) further comprises at least one crumbling system containing:
- at least one lever-type system (11) activated by said lever-type overturning system (12) of said self-loading system (5) during said positioning along said rotation axis (6) of said hopper (2), enabling the filling of said hopper (2) with said agricultural material, preferably maize;
- at least one rotary means (9) adapted to mow said agricultural material from at least one or more silos, said rotary means (9) being mechanically connected to said lever-type system (11) ;
- at least one conveyor means (7) adapted to convey said agricultural material, mowed by said rotary means (9) into said hopper (2), said conveyor means (7) being mechanically connected to said lever-type system (11).

2. Fixture (1) according to claim 1, **characterized in that** it is adapted to perform at least one agricultural function for spreading at least one agricultural material.

3. Fixture (1) according to claim 1, **characterized in that** said fixture is fastened to at least one lifting device of at least one agricultural tractor, through at least one or more fastening means (8) integrated into said self-loading system (5) of said agricultural fixture (1).

4. Fixture (1) according to claim 3, **characterized in that** said self-loading system (5) comprises at least one lever-type overturning system (12) and at least one mechanical member (13), said system (5) being actuated by at least one oil-dynamic circuit of said tractor carrying said agricultural fixture (1).

5. Fixture (1) according to claim 1, **characterized in that** said crushing system (4), integrated into said hopper (2), comprises at least one motored mill adapted to crush said agricultural material self-loaded into said hopper (2) by said self-loading system (5), and to deposit said material onto said delivering means (3), enabling an accurate and uniform dispensing.

6. Fixture (1) according to claim 1, **characterized in that** said delivering means (3) are adapted to transfer said agricultural material to at least one or more use destinations.

7. Fixture (1) according to claim 4, **characterized in that** said lever-type overturning system (12) of said self-loading system (5) is adapted to fill said hopper (2) with said agricultural material, through at least one overturning of said hopper (2) with at least one rotation of said hopper (2) along at least one rotation axis (6) of at least one angle of 90°, enabling at least one parallel alignment between at least one upper edge of said hopper (2) and at least one ground surface.

8. Fixture (1) according to claim 1 or 6, **characterized in that** said regulating system of the spreading of said delivering means (3) comprises at least one deviating means with a truncated cone section with variable walls adapted to adjust the width of at least one spreading area, enabling at least the delivery of said agricultural material adapted to satisfy one or more agricultural operating needs.

9. Fixture (1) according to claim 1 or 6, **characterized in that** said speed detecting system of said delivering means (3) is adapted to arrange the spreading of said agricultural material proportionally to at least one speed assumed by said tractor carrying said agricultural fixture (1), said speed detecting system comprising:
- at least one detecting means adapted to detect at least one signal characterizing the speed of said tractor carrying said agricultural fixture (1);
- at least one electronic card adapted to receive at least one signal sent by said detecting means;
- at least one measuring instrument adapted to detect said signal processed by sais electronic card and to send at least one electronic input signal to at least one motor (10) of said crushing system (4) and to at least one motor of said delivering means (2), respectively adjusting their crushing speed and spreading speed.

10. Fixture (1) according to claim 1 or 6 or 9, **characterized in that** said speed detecting system of said delivering means (3) is adapted to arrange the constant spreading of said agricultural material independently from at least one speed assumed by said tractor carrying said agricultural fixture (1), said speed detecting system comprising:
- at least one detecting means adapted to detect at least one signal characterizing the speed of said tractor carrying said agricultural fixture (1) ;
- at least one electronic card adapted to receive at least one signal sent by said detecting means;
- at least one measuring instrument adapted to detect said signal processed by said electronic card and to send at least one electronic input signal to at least one motor (10) of said crushing system (4) and to at least one motor of said delivering means (2), respectively adjusting their crushing speed and spreading speed.

11. Fixture (1) according to any one of the previous claims, **characterized in that** said delivering means (3) comprise a delivering system adapted to deposit said agricultural material, preferably maize, into at least one feeder.

12. Fixture (1) according to any one of the previous claims, **characterized in that** it comprises at least one electronic control device adapted to communicate with at least one measuring instrument of said tractor carrying said agricultural fixture (1), and to check at least one correct operation of said systems (4), (5), and of said means (3) of said fixture (1).

## Patentansprüche

1. Landwirtschaftliche Mehrzweckausrüstung (1), die mindestens ein Mahlsystem (4), das in mindestens einem Trichter (2) eingebaut ist, mindestens ein selbstladendes System (5) und mindestens ein Fütterungssystem (3) einschließt, das genannte Fütterungssystem (3) schließt mindestens ein Einstellungssystem für die Ausbringung ein, und ist **dadurch gekennzeichnet, dass** das genannte Fütterungssystem (3) mindestens ein Geschwindigkeitserfassungssystem einschließt sowie dadurch, dass die landwirtschaftliche Mehrzweckausrüstung (1) außerdem mindestens ein Futtermischsystem einschließt, das Folgendes enthält:
- Mindestens ein Hebelsystem (11), das durch ein Kipphebelsystem (12) des genannten selbstladenden Systems (5) während einer Positionierung längs einer Drehachse (6) des genannten Trichters (2) aktiviert wird und dadurch die Befüllung des genannten Trichters (2) mit landwirtschaftlichem Material, vorzugsweise Mais, fördert;
- Mindestens eine Drehvorrichtung (9), die dazu dient, das genannte landwirtschaftliche Material aus mindestens einem oder mehreren Silos zu zerschneiden, die genannte Vorrichtung (9) ist mechanisch mit dem genannten Hebelsystem (11) verbunden;
- Mindestens ein Futterband (7), das dazu dient, das genannte landwirtschaftliche Material, das durch die genannte Drehvorrichtung (9) im genannten Trichter (2) zerschnitten wurde, zu befördern, die genannte Vorrichtung (7) ist mechanisch mit dem genannten Hebelsystem (11) verbunden.

2. Ausrüstung (1) gemäß Patentanspruch 1, die **dadurch gekennzeichnet ist, dass** sie dazu dient, mindestens eine landwirtschaftliche Funktion für die Ausbringung von mindestens einem landwirtschaftlichen Material auszuüben.

3. Ausrüstung (1) gemäß Patentanspruch 1, die **dadurch gekennzeichnet ist, dass** die genannte Ausrüstung an mindestens einer Hubvorrichtung von mindestens einer landwirtschaftlichen Zugmaschine durch mindestens eine oder mehrere Befestigungsvorrichtungen (8) befestigt ist, die im genannten selbstladenden System (5) der genannten landwirtschaftlichen Ausrüstung (1) eingebaut sind.

4. Ausrüstung (1) gemäß Patentanspruch 3, die **dadurch gekennzeichnet ist, dass** das genannte selbstladende System (5) mindestens das genannte Kipphebelsystem (12) und mindestens ein mechanisches Element (13) einschließt, das genannte System (5) wird durch mindestens einen öldynamischen Kreislauf der genannten Träger-Zugmaschine der genannten landwirtschaftlichen Ausrüstung (1) angetrieben.

5. Ausrüstung (1) gemäß Patentanspruch 1, die **dadurch gekennzeichnet ist, dass** das genannte Mahlsystem (4), das im genannten Trichter (2) eingebaut ist, mindestens eine angetriebene Mühle einschließt, die dazu dient, das genannte selbstgeladene landwirtschaftliche Material im genannten Trichter (2) aus dem genannten selbstladenden System (5) zu zermahlen und das genannte Material auf der genannten Fütterungsvorrichtung (3) abzulegen, sodass eine genaue und gleichmäßige Verteilung begünstigt wird.

6. Ausrüstung (1) gemäß Patentanspruch 1, die **dadurch gekennzeichnet ist, dass** die genannte Fütterungsvorrichtung (3) dazu dient, das genannte landwirtschaftliche Material in mindestens einen oder mehrere Einsatzbereiche zu übertragen.

7. Ausrüstung (1) gemäß Patentanspruch 4, die **dadurch gekennzeichnet ist, dass** das genannte Kipphebelsystem (12) des genannten selbstladenden Systems (12) dazu dient, den genannten Trichter (2) mit dem genannten landwirtschaftlichen Material durch mindestens einen Kippvorgang des genannten Trichters (2) mit mindestens einer Drehung des genannten Trichters (2) längs mindestens einer Drehachse (6) mit mindestens einem 90° Winkel zu befüllen, indem mindestens eine parallele Ausrichtung zwischen mindestens einer oberen Kante des genannten Trichters (2) und mindestens einer Bodenfläche begünstigt wird.

8. Ausrüstung (1) gemäß Patentanspruch 1 oder 6, die **dadurch gekennzeichnet ist, dass** das genannte Einstellungssystem der Ausbringung der genannten Fütterungsvorrichtung (3) mindestens eine Abstreifvorrichtung mit abgestumpftem-kegelförmigem Abschnitt mit variablen Wänden einschließt, die dazu dient, die Breite von mindestens einem Ausbringungsbereich zu regulieren, indem mindestens die Fütterung des genannten landwirtschaftlichen Materials unterstützt wird, die dazu dient, eine oder mehrere Anforderungen der landwirtschaftlichen Arbeit zufriedenzustellen.

9. Ausrüstung (1) gemäß Patentanspruch 1 oder 6, die **dadurch gekennzeichnet ist, dass** das genannte Geschwindigkeitserfassungssystem der genannten Fütterungsvorrichtung (3) dazu dient, die Ausbringung des genannten landwirtschaftlichen Materials proportional zu mindestens einer von der genannten Träger-Zugmaschine der genannten landwirtschaftlichen Ausrüstung (1) eingenommenen Geschwindigkeit vorzubereiten, das genannte Geschwindigkeitserfassungssystem schließt Folgendes ein:
- Mindestens eine Erfassungsvorrichtung, die dazu dient, mindestens ein Signal zu erfassen, das die Geschwindigkeit der genannten Träger-Zugmaschine der genannten landwirtschaftlichen Ausrüstung (1) kennzeichnet;
- Mindestens eine elektronische Steuerkarte, die dazu dient, mindestens ein Signal zu erfassen, das an die genannte Erfassungsvorrichtung gesendet wird;
- Mindestens ein Messinstrument, das dazu dient, das genannte Signal zu erfassen, das von der genannten elektronischen Steuerkarte verarbeitet wird, und mindestens ein elektronisches Eingabesignal an mindestens einen Motor (10) des genannten Mahlsystems (4) und an mindestens einen Motor der genannten Fütterungsvorrichtung (2) zu senden, wobei es jeweils die Mahl- und Ausbringungsgeschwindigkeit einstellt.

10. Ausrüstung (1) gemäß Patentanspruch 1 oder 6 oder 9, die **dadurch gekennzeichnet ist, dass** das genannte Geschwindigkeitserfassungssystem der genannten Fütterungsvorrichtung (3) dazu dient, die konstante Ausbringung des genannten landwirtschaftlichen Materials unabhängig von mindestens einer von der genannten Träger-Zugmaschine der genannten landwirtschaftlichen Ausrüstung (1) eingenommenen Geschwindigkeit vorzubereiten, das genannte Geschwindigkeitserfassungssystem schließt Folgendes ein:
- Mindestens eine Erfassungsvorrichtung, die dazu dient, mindestens ein Signal zu erfassen, das die Geschwindigkeit der genannten Träger-Zugmaschine der genannten landwirtschaftlichen Ausrüstung (1) kennzeichnet;
- Mindestens eine elektronische Steuerkarte, die dazu dient, mindestens ein Signal zu erfassen, das an die genannte Erfassungsvorrichtung gesendet wird;
- Mindestens ein Messinstrument, das dazu dient, das genannte Signal zu erfassen, das von der genannten elektronischen Steuerkarte verarbeitet wird und mindestens ein elektronisches Eingabesignal an mindestens einen Motor (10) des genannten Mahlsystems (4) und an mindestens einen (nicht angegebenen) Motor der genannten Fütterungsvorrichtung (2) zu senden, wobei es jeweils die Mahl- und Ausbringungsgeschwindigkeit einstellt.

11. Ausrüstung (1) gemäß einem der vorhergehenden Patentansprüche, die **dadurch gekennzeichnet ist, dass** die genannte Fütterungsvorrichtung (3) ein Fütterungssystem einschließt, das dazu dient, das genannte landwirtschaftliche Material, vorzugsweise Mais, in mindestens einem Futtertrog abzulegen.

12. Ausrüstung (1) gemäß einem der vorhergehenden Patentansprüche, die **dadurch gekennzeichnet ist, dass** sie mindestens eine elektronische Steuervorrichtung einschließt, die dazu dient, mit mindestens einem Messinstrument der genannten Träger-Zugmaschine der genannten landwirtschaftlichen Ausrüstung (1) in Kommunikation zu treten, und mindestens eine korrekte Funktionsweise der genannten Systeme (4), (5) und der genannten Vorrichtung (3) der genannten Ausrüstung (1) zu kontrollieren.

## Revendications

1. Equipement agricole polyvalent (1) comprenant au moins un système de broyage (4) intégré à l'intérieur d'une trémie (2), un système auto-chargeant (5) et un moyen de distribution comprenant au moins un système de réglage de l'étalement, **caractérisé en ce que** le moyen de distribution (3) comprend au moins un système de détection de vitesse ; l'équipement agricole polyvalent (1) comprend aussi un système désileuse contenant :
- au moins un système à leviers (11) activé par un système de basculement à leviers (12) du système auto-chargeant (5) pendant un positionnement le long de l'axe de rotation (6) de la trémie (2), en favorisant le remplissage de la trémie (2) avec du matériel agricole, de préférence du maïs ;
- au moins un moyen tournant (9) apte à prélever ce matériel agricole dans un ou plusieurs silos ; ce moyen tournant (9) est relié mécaniquement au système à leviers (11) ;
- au moins un moyen convoyeur (7) apte à acheminer le matériel agricole, prélevé par le moyen tournant (9) vers la trémie (2) ; ce moyen convoyeur (7) est relié mécaniquement au système à leviers (11).

2. Équipement (1), selon la revendication 1, **caractérisé en ce qu'**il est indiqué pour exécuter au moins une fonction agricole pour l'étalement au moins d'un matériel agricole.

3. Équipement (1), selon la revendication 1, **caractérisé en ce qu'**il est fixé à un dispositif de levage d'un tracteur agricole, à travers un ou plusieurs moyens de fixation (8) intégrés dans le système auto-chargeant (5) de l'équipement agricole (1).

4. Équipement (1), selon la revendication 3, **caractérisé en ce que** le système auto-chargeant (5) comprend le système de basculement à leviers (12) et au moins un organe mécanique (13) ; ce système (5) est actionné par un circuit oléodynamique du tracteur portant l'équipement agricole (1).

5. Équipement (1), selon la revendication 1, **caractérisé en ce que** le système de broyage (4), intégré dans la trémie (2), comprend au moins un moulin motorisé apte à broyer le matériel agricole chargé dans la trémie (2) par le système auto-chargeant (5), et à déposer ce matériel sur le moyen de distribution (3), en favorisant une distribution précise et uniforme.

6. Équipement (1), selon la revendication 1, **caractérisé en ce que** le moyen de distribution (3) est apte à transférer le matériel agricole dans une ou plusieurs destinations d'emploi.

7. Équipement (1), selon la revendication 4, **caractérisé en ce que** le système de basculement à leviers (12) du système auto-chargeant (5) est apte à remplir la trémie (2) avec le matériel agricole, à travers au moins un basculement de la trémie (2) et au moins une rotation de la trémie (2) le long d'un axe de rotation (6) ayant un angle d'au moins 90°, en favorisant un alignement parallèle entre un bord supérieur de la trémie (2) et une surface de terre.

8. Équipement (1), selon la revendication 1 ou 6, **caractérisé en ce que** le système de réglage de l'étalement du moyen de distribution (3) comprend au moins un moyen déviateur à section tronco-conique à parois variables apte à régler la largeur d'une zone d'étalement au moins, en favorisant la distribution du matériel agricole pour répondre à un ou plusieurs besoins opérationnels agricoles.

9. Équipement (1), selon la revendication 1 ou 6, **caractérisé en ce que** le système de détection de la vitesse du moyen de distribution (3) est apte à prédisposer l'étalement du matériel agricole proportionnellement à une vitesse prise par le tracteur qui porte l'équipement agricole (1), ce système de détection de la vitesse comprend :
- au moins un moyen détecteur en mesure de relever un signal caractérisant la vitesse du tracteur qui porte l'équipement agricole (1) ;
- au moins une carte électronique en mesure de recevoir un signal envoyé par le moyen détecteur ;
- au moins un instrument de mesure apte à relever le signal élaboré par la carte électronique et à envoyer un signal électronique d'entrée à un moteur (10) au moins du système de broyage (4) et un moteur au moins du moyen de distribution (2), en réglant respectivement la vitesse de broyage et d'étalement.

10. Équipement (1), selon la revendication 1 ou 6 ou 9, **caractérisé en ce que** le système de détection de la vitesse du moyen de distribution (3) est apte à prédisposer l'étalement constant du matériel agricole quelle que soit la vitesse prise par le tracteur qui porte l'équipement agricole (1), le système de détection de la vitesse comprend :
- au moins un moyen détecteur en mesure de relever un signal caractérisant la vitesse du tracteur qui porte l'équipement agricole (1) ;
- au moins une carte électronique en mesure de recevoir un signal envoyé par le moyen détecteur ;
- au moins un instrument de mesure apte à relever le signal élaboré par la carte électronique et à envoyer un signal électronique d'entrée à un moteur (10) au moins du système de broyage (4) et un moteur au moins du moyen de distribution (2), en réglant respectivement la vitesse de broyage et d'étalement.

11. Equipement (1) selon l'une des revendications précédentes, caractérisé en le moyen de distribution (3) comprend un système de distribution apte à déposer le matériel agricole, de préférence du maïs, dans une mangeoire au moins.

12. Equipement (1) selon l'une des revendications précédentes, **caractérisé en ce qu'**il comprend au moins un dispositif de contrôle électronique apte à communiquer avec un instrument de mesure du tracteur qui porte l'équipement agricole (1), et à contrôler le fonctionnement correct de ces systèmes (4), (5), et du moyen de distribution (3) de l'équipement (1).
